(19) Europäisches Patentamt
European Patent Office
Office européen des brevets

(11) EP 4 807 355 A1

# (12) EUROPEAN PATENT APPLICATION

(43) Date of publication:
**16.09.2026 Bulletin 2026/38**

(21) Application number: **26151173.7**

(22) Date of filing: **09.01.2026**

(51) International Patent Classification (IPC):
***G01N 27/20*** *(2006.01)* ***G01M 5/00*** *(2006.01)*

(52) Cooperative Patent Classification (CPC):
**G01N 27/20; G01M 5/0033; G01M 5/0083; G01M 5/0091; G01N 29/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.03.2025 EP 25163996**

(71) Applicant: **Mazur, Antoni**
**33-100 Tarnow (PL)**

(72) Inventor: **Mazur, Antoni**
**33-100 Tarnow (PL)**

(74) Representative: **AOMB Polska Sp. z.o.o.**
**ul. Rondo Ignacego Daszynskiego 1**
**00-843 Warsaw (PL)**

## (54) METHOD FOR MEASURING PROPAGATION OF MATERIAL DEFECTS IN STEEL STRUCTURES AND MEASUREMENT SYSTEM FOR CARRYING OUT THE METHOD

(57) Disclosed is a method for measuring defect propagation: corrosive defects in materials and welds in steel structures, pipelines, and tanks, on which at least two pairs of measurement gates (5, 6) are arranged in mutually perpendicular directions, wherein one pair of gates comprises two longitudinal measurement gates (5), and the other pair comprises two perpendicular measurement gates (6). It comprises the following steps: (a) applying a voltage pulse to the first pair of gates (5, 6); (b) measuring the voltage drop $\Delta U_1$ and the pulse propagation time $T_{p1}$ on this first pair of measurement gates (5, 6); (c) applying a voltage pulse to the second pair of measurement gates (5, 6); (d) measuring the voltage drop $\Delta U_2$ and the pulse propagation time $T_{p2}$ on this second pair of measurement gates (5, 6); (e) determining the three-dimensional volume of the defect by comparing the results of voltage drops $\Delta U_1$, $\Delta U_2$ and pulse propagation times $T_{p1}$, $T_{p2}$ from the mutually perpendicular measurement gates (5, 6) with reference results. The disclosure is also directed to a measurement system for measuring the propagation of material defects, comprising a voltage pulse source (1) for applying pulses to the measurement gates (5, 6); at least two pairs of electrodes forming measurement gates (5, 6) - arranged to be placed on the surface of the tested structure; an analog-to-digital converter (8); a data storage unit (12); and a data processing unit (13) with software for utilizing reference data from radiographic (RT) and ultrasonic (UT) tests and for calculating the defect volume based on the correlation of this data with signals from both measurement gates (5, 6). The disclosure allows for continuous measurement of the actual defect volume in 3D, provides the possibility of wireless transmission of the measurement signal, and enables assessment of the remaining durability margin of pipelines and tanks of various purposes and operational requirements in real time, without the need to take them out of service.

DISPATCHER
PC
13
10
mV
9
CH
12
11
A/D
8
7
4
6
5
3
2
1

Fig. 3

## Description

### Field of the invention

The invention relates to the field of technical diagnostics in the area of systems for monitoring the operational durability of pipelines and installation tanks of various purposes and operating pressure ranges, after a significant period of operation. In particular, it concerns a method of assessing changes in fatigue strength of specific locations of a corrosive nature and welded joints in a 3D context without taking the installation out of service.

### Background of the invention

The technological correctness of the manufacture of bends (elbows) and permanent joints of transmission and installation pipelines and tanks, while taking into account the intensity of their operation, is of key importance for the operational lifespan of the installation and the frequency of occurrence of so-called "shutdowns". In practice, this means that any assembly error, structural non-homogeneity, welding discontinuity, occurrence of overloads with the effect of their accumulation, causes the final summation and superposition of stresses up to the level of reaching their concentration that initiates the cracking process, resulting in the leaking of the pipeline or tank. The intensity of operation generates the occurrence of cyclic load variability, an increase in the effects of temperature and aggressive media, with cases of expansion to the level of stress corrosion cracking and pressure surges. These factors are cumulative in nature, and their cumulative influence in the presence of crack initiators leads to gradual changes in the metal structure resulting in the initiation and development of a micro-crack up to the critical defect size.

Stress superposition is a well-known phenomenon in strength of materials; however, the causes of their formation are very often overlooked, and hence the lack of application of full or incomplete heat treatment enabling their relaxation. The lack of relaxation is the cause of residual stresses resulting from the metallurgical process, plastic working and welding, including (among others) both the weld itself and the heat-affected zone (HAZ). If variable loads resulting from pressure medium pulsations, hydraulic surges and temperature changes are superimposed on these stresses, the risk of crack initiation increases significantly. Under such conditions, it becomes crucial to determine the moment at which the accumulation of loads brings the material closer to the Serviceability Limit State (SLS) and when it reaches the Ultimate Limit State (ULS). In practice, without access to data on changes in the defect volume in real time, it is not possible to predict the behaviour of the material over a multi-month horizon or to precisely determine the durability reserve.

The operation of pipelines and tanks, understood as a complex process of multi-year exposure to loads, environmental conditions and variable operating states, constitutes a justification for searching for new methods of assessing their durability. The introduction of a new measurement technique meets the requirements of the times by ensuring continuity of measurement taking into account the specificity of critical locations for durability assessment, which are not taken into account by the latest applied durability measurement methods, particularly for pipelines, presented below, including the scope of measurement automation as well.

The specificity of the location (measurement point) here concerns smaller bend radii of the pipeline route than $R = 1.5D$ to $R = 3.5D$, where D equals the pipeline diameter, compared to the currently recommended $R = 6 \div 7D$ (induction bends), $R = 40DZ$ (cold-bent bends), or the occurrence of tees with outlets constituting a minimum of 50% of the pipeline diameter D. Due to such location and geometry of the locations, it is necessary to expose the pipeline, remove its insulation and each time shut down the installation.

Thus, the current methods do not allow for easy measurement at a 90° elbow angle and for the applied tees and crosses of any diameter, and are limited by the curvature of the bend and pipeline diameters.

The Operations and Maintenance Manuals (O&MM) of the KDCII installation (Double-Pressure Acid Plant), covering a period of five and a half years (1992-1998), indicates the occurrence of total shutdowns at the level of seven months, which constitutes a significant percentage of operating time during the installation's service period. From the (O&MM) record, it is not possible to determine precisely the nature of the damage occurring and its significance for event assessment. Even if one assumes that only 10÷15% of them are related to a change in mechanical (strength) properties of the pipeline material, or the influence of defect development in welded joints, this still represents a significant portion of the installation's downtime periods. This reduction in the material properties of the material is the result of accumulated overloads and their influence on the welded joints of the installation and through the level of residual stresses from the period of pipeline production, which causes the development of defects in the welded joints. Hence, even three days of downtime per month generates measurable economic costs associated with the installation's downtime.

Known durability assessment methods include analyses of wall thinning, chemical effects of the medium or environment, the presence of internal defects such as welding discontinuities, porosity and micro-cracks. These methods comply with the requirements of standards EN 1427:2004:06-2004; however, their applicability is limited to periodic inspections and hence a temporal assessment, which does not reflect the dynamics of changes occurring in the material during operation in the periods between installation inspections.

Due to the real technical and technological con-

straints associated with the possibility of increasing the capacity of chemical, fuel or gas installations in which there is a stock of pipe installations and pressure tanks with a construction period older than 10-12 years, the only way to improve operational efficiency remains shortening both planned and unplanned shutdowns by extending the actual durability of critical pipeline locations through the introduction of measurement automation.

Industrial practice shows that the assessment of fatigue durability of pipelines is carried out using empirical methods, and includes the determination of residual fatigue durability in the low- or high-cycle range up to the point of crack initiation and with propagating crack under various operating conditions.

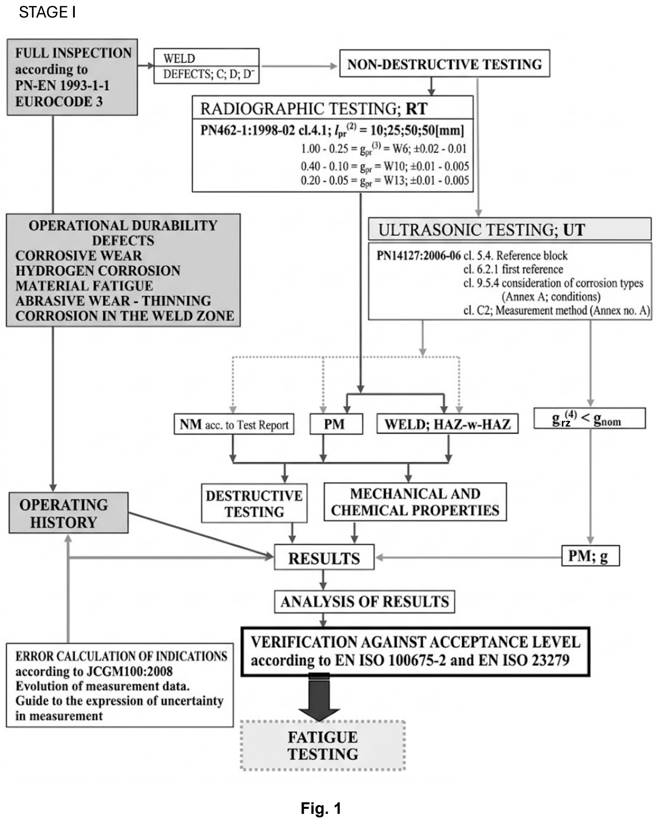

The defectiveness of the location includes: corrosive defects, and welding discontinuities, inclusions affecting fatigue strength, proving their origin from the production period of the pipeline, as illustrated in Fig. 1.

At the present time, the issues of assessing the operational durability of pipelines after a defined period of operation are based mainly on RT (radiographic) and UT-ET and UT-TOFD next referred to as (UT, ultrasonic) examinations of welds, taking into account the permissible defect sizes defined by standards (Fig. 1). These studies are conducted in 2D context, where the characteristic dimensions of the defect and its depth constitute projections onto the OX and OY, OZ planes, with periodic checking of their sizes, carried out at the stage of taking the pipeline out of service.

In recent years, primarily an increase in the accuracy of weld defect measurement methods has been observed in the context of pipeline durability assessment. In the area of tanks and pipelines, eleven methods for determining the location of leakage (seepage) occurrence are used jointly, with the introduction of measurement automation.

For transmission pipelines, the following methods are mainly used: tracer migration, optical, tracer gas, intelligent pistons (expensive), and the Guide Waves

*ąd*

method, recommended by the Technical Inspection Authority (UDT, pl. *Urzd Dozoru Technicznego).*

The methods of tracer gases, intelligent pistons and Guide Waves, however, exhibit a number of limitations in application. These include, among others, the necessity of exposing the pipeline, the exclusion of the use of the UT method for determining the defect size in the case of gas transmission, the curvature of the pipeline bend, the necessity of each time circumferentially grinding off the insulation in order to reach the pipe wall, limitations resulting from the lower temperature of the flowing medium (below 200-300°C), and in the case of the Guide Waves method additionally the occurrence of compacted or moist soil and older types of insulation such as rock wool.

Currently, more advanced methods have been introduced for measuring the level of pipeline weld defects, such as: TOFD, TFM and the most recent PAUT, in combination with "intelligent pistons", with the required minimum curvature of the pipeline bend. However, these methods require the application of appropriate defect "reconstruction" principles in order to visualize it in 3D form with the introduction of an expanded scope of automation.

The application of the above methods in practice is mainly limited to the production stage, where access to welds is sufficient. In the case of pipelines and tanks operated for at least 10-12 years, the use of these methods is significantly hindered due to physical and technical requirements, such as: the need to obtain permission for excavation, the size of access to the examination location (particularly in the case of underground transmission pipelines, where equipment and manual human access are required) and the need to remove the pipeline insulation, especially in multi-storey installations comprising jackets, shields and installation shutdown.

The techniques currently used to measure the durability of materials, especially pipelines and welded joints, do not take into account the actual specifics of the measurement sites or the importance of continuous monitoring.

Industrial radiography, ultrasound: methods such as TOFD or PAUT enable obtaining a two-dimensional image of the defect and detecting its presence; however, these methods require direct access to the pipeline surface, which is in the majority of cases covered with thermal, protective or anti-corrosion insulation. Their use therefore requires stopping the installation, exposing the pipeline, removing the insulation and ensuring appropriate access conditions, which generates costs and is associated with operational risk. The results obtained by these methods reflect only the instantaneous state, recorded at the moment of performing the examination. In practice, this makes it impossible to precisely estimate the rate of defect propagation development, which in the case of fatigue cracks ultimately has the overtones of a critical event horizon. Between successive periodic inspections, the defect may undergo significant changes, the propagation and nature of which are not monitored on an ongoing basis, leading to a lack of real knowledge about this process.

None of the methods has provided for the possibility of observing defect development during the operation of the installation - and yet it is precisely the operational moments (start-up, shutdown, flow changes, hydraulic surges, temperature changes) that generate the greatest stresses and changes in the defect geometry. None of the previously applied methods has therefore provided for the possibility of conducting measurements in a continuous manner, without breaks in operation, maintaining the full functionality of the installation and without the need to each time expose the difficult-to-access examination location. Their application additionally requires significant operational downtime and appro-

priate technological conditions, which are often difficult to fulfil in installations of large-scale complexity resulting from difficult accessibility and multi-level nature.

The operation of pipelines in practice is a dynamic process in which the material at the weld location does not behave in a static manner, but undergoes constant internal changes, invisible to diagnostic methods requiring the shutdown of the installation and the performance of a one-time examination. It is precisely this complexity of operation that forms the basis for searching for a new method and measuring device - one that would enable the observation of material changes in continuous mode, without interruptions in operation and without the need to re-expose the pipeline. Furthermore, in the current state of the art, there is no solution enabling the measurement of defect propagation (3D) under explosion-proof conditions, nor a device allowing monitoring of changes in defect volume with high accuracy even at elevated temperature.

In the absence of an appropriate method in the state of the art, it is therefore necessary to develop a new solution that will allow the realization of the measurement of the actual defect volume in a 3D context, will ensure the possibility of transmitting the measurement signal wirelessly and will enable the assessment of the pipeline durability reserve in real time, tanks of various purposes and operational requirements without the need to take them out of service.

**The essence of the invention**

The subject of the invention is a method for measuring the propagation of material defects of steel structures. These may include, in particular, pipelines and pressure tanks with level. At least two pairs of measurement gates are placed on the tested element in mutually perpendicular directions, wherein one pair of gates comprises two longitudinal measurement gates and the other pair comprises two perpendicular measurement gates. The method comprises the following steps:

applying a voltage pulse to the first pair of gates from the at least two pairs of measurement gates (constituting a set of n-th type of measurement arrangements);
measuring the voltage drop $\Delta U_1$ and the pulse propagation time $T_{p1}$ on said first pair of measurement gates;
applying a voltage pulse to the second pair of gates from the at least two pairs of measurement gates (constituting a set of n-th type of measurement arrangements);
measuring the voltage drop $\Delta U_2$ and the pulse propagation time $T_{p2}$ on said second pair of measurement gates;
determining the change in the three-dimensional defect volume by comparing the results of the voltage difference drops $\Delta U_1$, $\Delta U_2$ and pulse propagation times $T_{p1}$, $T_{p2}$ from the mutually perpendicular measurement gates with reference to reference results.

Preferably, the reference results used in step e) are obtained the stage of calibration of the measurement system with a defect standard using radiographic testing (RT) and ultrasonic testing (UT).

Reference results used in step e) are the characteristic defect dimension $\bar{a}$ and the wall thickness $g_r$ obtained using radiographic testing (RT) determining the characteristic dimension and ultrasonic testing (UT) determining the depth of the defect location. The reference results are processed in an obvious manner by the operational program (boundary values).

At the step e) a differential analysis is carried out using the linear relationship of results between the voltage drop $\Delta U$ and the time $T_p$ from the perpendicular gates (e.g. on a rectangular digital oscilloscope) and the reference dimension of the standard from RT and UT tests.

Differential analysis of the linear relationship od the results between $\Delta U$ and $T_p$ and the wall thickness $g_r$ enables direct "reconstruction" of a defect to three-dimensional level. The characteristic dimension (a; hereinafter referred to as defect length), corresponds to a defect parameter $\bar{a}$, and is obtained preliminarily and indirectly from radiographic testing (RT) and ultrasonic testing (UT) and serves as a reference (calibration) point; however, the time-based measurement of the voltage drop difference for defect propagation in three-dimensional representation using measurement gates determines the current assessment of the actual defect dimension (a) with reference to the parameter $\overline{a_{rz}}$ and the critical defect size $a_{cr}$ to $\overline{a_{cr}}$.

Preferably, the method of measurement additionally comprises step f) of determining the actual pipeline durability reserve, calculated as the difference between the Ultimate Limit State, ULS, and the Serviceability Limit State, SLS, where ULS is determined as the permissible number of cycles to failure based on the defect volume and critical defect dimension determined in step e), and SLS is determined as the predicted number of experimental cycles based on current load monitoring and damage accumulation.

In terms of determining the critical defect dimension for SLS, it is the defect size corresponding to the number of cycles to failure ($N_{fc}$) with the stress level equal to the yield strength $R_e$ (according to the PN-EN 90/B-03200 standard), and with the level of the characteristic dimension parameter $\bar{a}$ with the overload magnitude element.

Preferably, the allowable number of cycles $N_{fc}$ is determined using a calculation method based on the equivalent stress amplitude ($\sigma_{az}$) or the allowable stress amplitude ($\sigma_a$) necessary to determine the durability with respect to this number of cycles $N_{fc}$, as well as an experimental method based on fatigue tests of material sam-

ples, or in a strain-based approach (critical strain method for the low-cycle range).

The introduction of the $\sigma_{az}$ value is a consequence of considering random stresses (induced by loads), which vary in magnitude, duration, and occurrence. Such loads can be described using a continuous function (empirical distribution) or a discrete function with step variables. In the case of a continuous function, the "rain flow" method is used to analyze the occurring loads and the number of cycles. In the case of a discrete function, blocks of relative loads are considered (in the form of a histogram; the number of steps is important for calculation accuracy). These blocks determine the proportion of the load magnitude relative to the maximum load magnitude, taking into account the duration of individual blocks. Hence, separating the maximum load from the random process allows to present it as steady, with a certain equivalent amplitude $\sigma_{az}$.

Preferably, the frequency of generation of measurement pulses in steps a) and c) is regulated adaptively, and is increased upon detection of an upward trend in the defect volume.

The frequency of measurement pulse generation can be increased when an upward trend in the defect volume is detected in the range from the 80% defect level.

Preferably, before step e), measurement data from the measurement gates are transmitted to the data storage unit (Monitoring Centre, MC) and visualized in real time.

The subject of the invention is also a measuring system for measuring the propagation of material defects in steel structure elements using the method described above, comprising:

- at least one voltage pulse source for applying a pulse to the measurement gates;
- at least two pairs of electrodes forming measurement gates, wherein they comprise a pair of longitudinal measurement gates and a pair of perpendicular measurement gates positioned orthogonally relative to the pair of longitudinal measurement gates, and arranged to be placed on the surface of the examined structure;
- an analogue-to-digital converter for conversion of signals from the measurement gates;
- a data storage unit, configured to receive and store reference data from radiographic testing (RT) and ultrasonic testing (UT) and measurement data from both measurement gates;
- a data processing unit, configured to process reference data from radiographic testing (RT) and ultrasonic testing (UT) and to calculate the defect volume based on the correlation of these data with signals from both measurement gates.

Data can be transmitted to the data storage unit wirelessly, for example, using a data transmission unit configured to transmit data from the measurement gates to the data storage unit. The data is transmitted to the CM in real time.

Preferably, the measuring system additionally comprises a millivoltmeter for local reading of voltage drops and a digital oscilloscope for visualization of the pulse waveform in the time domain.

Preferably, the measuring system additionally comprises a switch for changing the direction of application of voltage pulses, to the longitudinal gate or perpendicular gate respectively.

Preferably, the measurement gates have dimensions of 5 mm $\times$ 5 mm $\times$ L (where L is the length related to the area of the defective location). The area of the defective location L, for example, may have a length of 10 mm to 100 mm).

Preferably, the measurement gates are mounted on the surface of the examined structure using anisotropic adhesive (directionally conductive) or using magnetic connectors.

Preferably, the measuring system comprises a module switch enabling the change of the return signal analysis mode between measurement of the magnitude of the voltage drop and measurement of the increment in the duration of the measurement signal.

The invention also provides a computer program comprising instructions which, when the program is executed by a computer, cause the computer to carry out the steps of the method according to the invention.

The invention also provides a computer-readable data carrier comprising instructions which, when executed by a computer, cause the computer to carry out the steps of the measurement method according to the invention.

The developed method enables extension of the Serviceability Limit State (SLS) analysis to the elastic-plastic range, which is significant in the field of dimensioning of pipeline structures. The method allows precise determination of the critical defect size for stresses, taking into account characteristic loads acting on the structure - both permanent and variable - including their influence in the form of a multiplier of the consequence-of-failure factor ($f_n$). This makes it possible to determine the level of allowable stresses correlated with the structure and the loads acting thereon and, consequently, to define the limiting value of the critical defect size.

The method assumes a constant relationship between the spatial dimension of the defect (its angular position) as the characteristic defect length and the actual, current wall thickness of the pipeline. The measurement is carried out on the basis of analysis of the actual voltage drop resulting from defect propagation within an area delimited by measurement gates.

The measuring system enables measurements to be performed along two axes. These measurements may be carried out in a sequential or parallel mode (successively or simultaneously on the longitudinal and perpendicular gates) without the need for physical re-

configuration (rewiring) of the cabling, which allows continuous assessment of the actual defect size.

The measuring device meets the requirements for operation in explosion-hazard zones (explosion-proof design), ensuring an instrument accuracy class of 0.5%, which ultimately satisfies stringent supervisory requirements.

Advantageously, an integral part of the solution is software (operating on a computing device) implementing an algorithm for analyzing changes in defect volume, taking into account the obtained measurements of defect volume variation. The system provides visualization of instantaneous values in real time and of the course of changes in operational durability, as well as full archiving of measurement data.

Data transmission is advantageously performed wirelessly (e.g. using a VAN-type network), which enables system scalability by adding measuring points (from 1 to n) and visualization, in real time, of the operational durability state with indication of the remaining durability margin of the pipeline. The solution is consistent with the Industry 4.0 standard, offering remote automated monitoring of the technical condition of the pipeline.

## Brief description of the drawings

Fig. 1 shows a block diagram of the audit of sensitive structural locations of the object and the procedure algorithm for conducting non-destructive testing of material defectiveness according to RT and UT, constituting basic research for the principal - fatigue - tests, necessary for the assessment of operational durability;

Fig. 2 shows the algorithm for conducting the principal fatigue tests, necessary for the mathematical description of durability determination;

Fig. 3 shows a diagram of the measuring system that is the subject of the present invention.

## Detailed description of the invention

The subject of the present invention is an innovative method and device for continuous, non-invasive monitoring of the operational durability of industrial pipelines and tanks, and in particular their corrosive locations and welded joints, in real time, together with the visualization of the propagating defect tip up to the limiting size and the change in the defect diameter or width in three-dimensional (3D) context. The invention enables measurement of the actual defect volume in pipeline material, integrating mechanical and structural data of the material with actual operating conditions, which constitutes a significant advance relative to previous methods limited to 2D measurements and periodic checking of defect sizes at defined pipeline points.

As described in detail above, in the current state of the art the assessment of the operational durability of pipelines is based mainly on periodic RT (radiographic) and UT-ET (Ultrasonic Testing - Echo Technique) and UT-TOFD (Ultrasonic Testing - Time of Flight Diffraction); hereinafter referred to as UT - ultrasonic examinations - which have significant limitations. Above all, they define permissible defects in a two-dimensional context by measuring characteristic dimensions and defect depth. They do not provide complete information about the volumetric nature of degradation (3D). These methods also require periodic shutdown of the pipeline from service for the purpose of its exposure and removal of insulation. Furthermore, industrial practice shows that the assessment of fatigue durability of pipelines is carried out using empirical methods, by determining the residual fatigue durability in the low- or high-cycle range up to the point of crack initiation and its change to the level corresponding to ULS, which does not provide a complete real-time account of changes in the durability state of the installation. That is, this approach does not take into account in real time the variability of pipeline operating parameters and the actual propagation of defects.

There is therefore an urgent need to develop a method that eliminates the need for frequent shutdowns and excavations, while simultaneously offering a complete volumetric picture of the defect.

The invention solves the limitations of the state of the art by developing a comprehensive measurement method enabling direct measurement of defect volume in 3D context and linking measurement results to the actual mechanical state of the material and operational loads.

The advantage and novelty of the presented solution is the development of a comprehensive measurement method enabling direct "reconstruction" of the third dimension of the defect for the volume (height) and linking measurement results to the state of the mechanical properties of the material (using the developed operating program).

The invention is based on the application of a unique measuring system based on four gates (two pairs of perpendicular gates), which measures the drop in voltage pulse and the time of its propagation in the material, which allows for the reconstruction of the third dimension of the defect. In the newly developed method, indirect estimation based solely on linear dimensions in the XOY and XOZ planes is not used; instead, the defect volume in the wall is directly measured during its development. This is realized through analysis of the actual voltage difference drop and pulse propagation time in the area bounded by the measurement gates, which in conjunction with the baseline data from RT/UT enables precise determination of the defect parameter $\bar{a}$ and the actual wall thickness ($g_{rz}$).

The method enables determination of ULS and SLS based on the durability difference (ULS - SLS). This enables determination of the actual durability reserve and the permissible durability in accordance with stan-

dards (including PN-EN), which allows for safe extension of the installation's operating time or a precise emergency shutdown. The system takes into account the determination of the permissible defect size for the significance of durability to failure and introduces an accuracy level enabling continuous tracking of defect propagation in the wall and hence the permissible operational durability in accordance with standards (PN-EN) and with conditions of maintaining operational safety.

The defectiveness of pipe materials is a complex phenomenon encompassing spatial corrosive defects, welding discontinuities (voids, micro-cracks, fusions) and inclusions from the production period of the pipeline and other defects arising at the stage of metallurgical production. All these factors have a key influence on fatigue strength, as illustrated in the audit process in Fig. 1.

The diagram presented in Fig. 1 illustrates the process of acquiring input data for the monitoring system. The procedure begins with the identification of sensitive locations, in particular welds, and potential defects. Next, baseline non-destructive tests are performed. Radiographic Testing (RT), in accordance with standard PN-EN 462-1:1998-02, determines the weld class (e.g., W6-W12) and the permissible deviations of wall thickness $g_{dv}$, with accuracy to hundredths of a millimetre. Ultrasonic Testing (UT) - (e.g., in accordance with PN-EN 14127:2006-06), is used for calibration of depth measurement, taking into account types of corrosion and measurement methods. The criterion for **measurements** is the boundary condition of wall thickness $g_{rz} < g_{nom}$. For an object characterised in this way, tests of mechanical, chemical and structural properties are carried out for: new material (NM), parent material (PM) and parent material with a butt weld ($PM_w$) together with the heat-affected zone (HAZ-w-HAZ). The scope of mechanical property testing includes the determination of parameters such as mechanical quantities as: tensile strength ($R_m$), yield strength ($R_e$), elongation ($A_5$), impact energy (KCV), hardness (HCR) and Young's modulus ($E \times 10^5$) for these materials (material stiffness for the wall).

The collected results constitute the "input" for the numerical model, constituting data for analysis, enabling assessment of the influence of actual loads on degradation (hydrogen corrosion, fatigue, abrasive wear, etc.). The final product of the process is the assessment of operational durability, taking into account degradation factors such as: corrosive wear, hydrogen corrosion, material fatigue, abrasive wear (thinning) and corrosion in the welding zone according to EN 14127:2004.

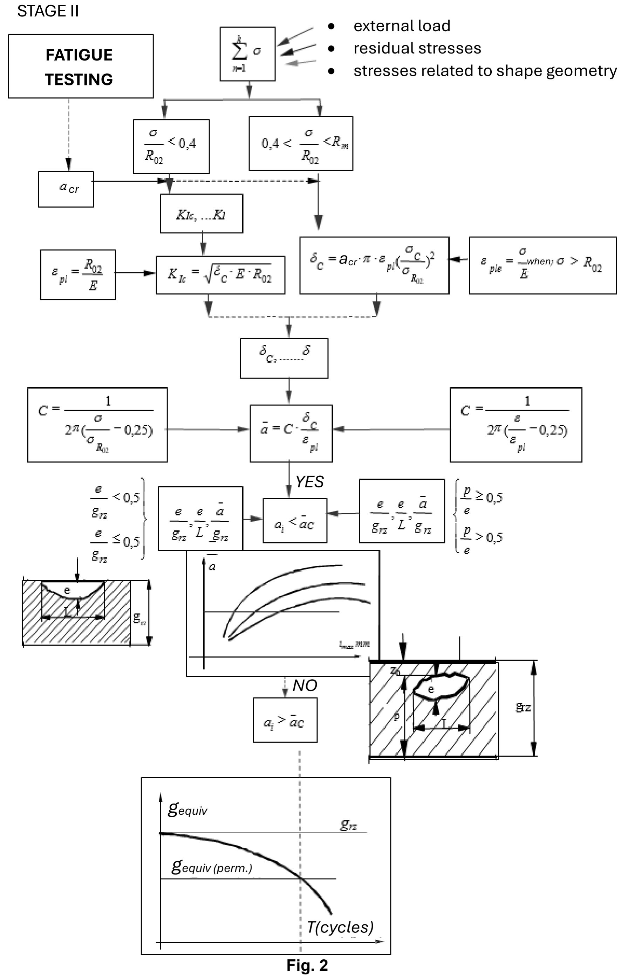

The results of these tests are therefore used for modelling fatigue loads and thereby demonstrating the influence of operating loads on the change in operational durability of the pipeline. The modelled fatigue loads are the basis demonstrating the influence of actual external loads on the rate of the process of changes in mechanical properties for the assessment of the course of changes in operational durability of the pipeline, as shown in Fig. 2. The detail and accuracy of the monitoring system is therefore based on the advanced fatigue algorithms presented in Fig. 2. The results of mechanical property testing (non-destructive, basic research; Stage I) are used for fatigue testing (core research; Stage II) in order to model the influence of actual external loads on the change in pipeline durability.

The measuring system takes into account the total stresses $\Sigma\,\sigma$, which include: external load, residual stresses and stresses associated with the geometry of the shape. The algorithm shows the differentiation of computational paths (selects the computational path) depending on the level of material effort:

- for stresses

$$\frac{\sigma}{R_{02}} < 0.4$$

(elastic range / low loads);

- for stresses

$$0.4 < \frac{\sigma}{R_{02}} < R_m$$

(elastic-plastic range).

The detail and accuracy of the measurement algorithm shown in Fig. 2 is based on fatigue tests. The key element is the determination of the stress intensity factor $K_{IC}$ and the defect parameter $\bar{a}$, in order to determine the number of cycles to failure, i.e., the critical defect dimension. This feature is incorporated into the method included in the operating program of the system. The system takes into account and calculates the number of cycles to failure by two methods:

- experimental method $N_{fcexp}$, based on actual fatigue tests of specimens taken from local sampling;
- computational method $N_f$, determined mathematically with the accuracy of calculation of the equivalent stress amplitude $\sigma_{az}$ based on current operating loads (load history method - rain flow).

Both stages (Full Inspection; FI) provide knowledge about the significance of: the so-called "sweating" level (which is a direct indicator of fitness for use (according to point 9.1 of PN-EN 13306:2001) to the level of emergency state - allowing assessment of the magnitude of the difference between the number of mathematically determined destructive cycles $N_f$ based on the semi-probabilistic method and the experimental $N_{fcexp}$, enabling the determination of boundary curves. Comparison of both result courses allows for the determination of boundary curves, and reference to the actual number of weld load cycles allows for the determination of the level of the pipeline durability reserve.

In the low-cycle range, the algorithm is based on the relationships of Manson-Coffin, Morrow, Langer and Ramberg-Osgood, taking into account the symmetry and asymmetry of load cycles. The nature of the loads stimulates the presentation of the fatigue durability of the structure both in terms of stress $\sigma_a$ and strain $\Delta\varepsilon_{ac}$, taking into account coefficients: formula accuracy factor $\gamma_{Ff}$ and inspection and access to main structural nodes $\gamma_{Mf}$ (in accordance with PN EN 1993-1-1 Eurocode 3).

The invention (method, system, program) carries out the measurement in real time, enabling continuous monitoring and visualization of the approach of the parameter quantity to the boundary curves. Calculations are carried out using error analysis in accordance with JCGM100:2008. This allows for an accuracy of the specified quantities when using the developed method and device at the level of 0.2-0.5% (measuring device class max. 0.5%) for visualization and monitoring of the approach of measured actual parameters to boundary curves (defect length, number of cycles). The critical defect size, of a semi-elliptical or elliptical type, corresponds to the type of defect (surface and internal) as well as the critical load and the threshold magnitude of crack propagation development and the permissible and critical number of cycles to failure.

The present method of "reconstruction" of the third defect dimension to the 3D level shows how significant the characteristic defect dimension a and $\overline{a}$ is, together with the remaining linear dimensions, for determining the actual defect area relative to the actual wall thickness of the pipeline ($g_r$) and the significance of this dimension for wall durability. As mentioned above, in the present method, indirect reference to linear dimensions in the XOY and XOZ planes is not used; instead, the defect volume in the wall is directly measured, resulting from the actual voltage drop during its development in the area bounded by the measurement gates.

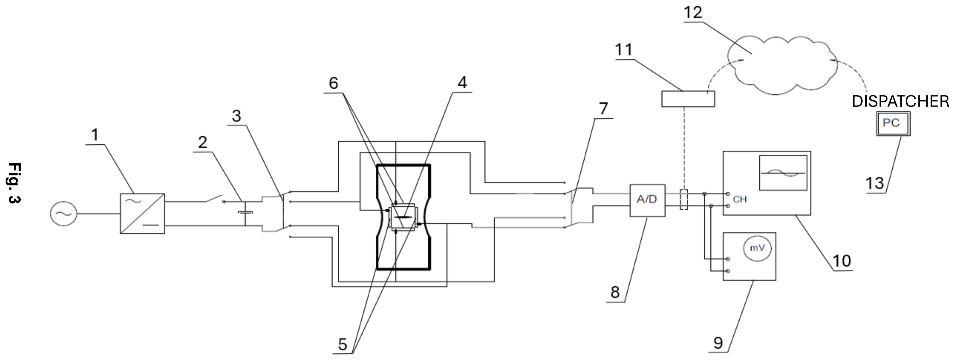

The testing system implementing the method according to the invention has been schematically presented in Fig. 3. The measuring system shown in Fig. 3 comprises elements cooperating in order to carry out the measurement of the three-dimensional defect volume (3D) and to perform visualization of the operational durability state of the pipeline (using the operating program). The measuring system comprises the following cooperating elements: voltage pulse source 1, capacitor 2, measuring system switch 3, specimen with modelled defect 4, longitudinal measurement gate 5, perpendicular measurement gate 6, module switch 7, analogue-to-digital converter 8, digital millivoltmeter 9, digital rectangular oscilloscope 10, data transmission unit 11, data storage unit 12, data processing unit 13.

The voltage pulse source 1, i.e., the power source and signal formation source, generates voltage pulses initiating the measurement. The pulse parameters (amplitude, duration) are controlled in order to obtain repeatable voltage drops on the examined structure. The system preferably comprises a voltage pulse source 1 of a constant value for measurement from 10 V to 70 V, depending on wall thickness.

The capacitor 2, being a preferred element of the system, serves as an energy storage, i.e., accumulates the energy necessary for generating a stable repeatable current pulse, ensuring adequate current capacity for the measurement pulse and the stability of its parameters at the moment of discharge. It therefore ensures rapid discharge towards the measurement gates. The capacitor 2 has a capacitance dependent mainly on the length of the measurement leads and the measuring part of the system, which preferably falls in the range from 6800 μF at a voltage of 40 V to 50000 μF at a voltage of 100 V. The capacitor 2 is adapted for operation in the temperature range from -40 to +150°C (specialist version).

The measuring system switch 3 is a commutation element controlling the direction of the test signal flow; it is activated by a command from the operating program in the system, i.e., in the data processing unit 13. The switch enables selective (sequential or selective) routing of the pulse to the longitudinal gate 5 or perpendicular gate 6, i.e., the choice between longitudinal measurement (longitudinal measurement gate 5) and perpendicular measurement (perpendicular measurement gate 6). This makes it possible to measure in two axes, sequentially or in parallel, without the need to rewire the cabling. The application of voltage pulses to the measurement gates 5, 6 may however be realized differently than using the described switch 3. For example, the system may contain more voltage pulse sources 1, e.g., two voltage pulse sources 1 (one for each pair of gates 5, 6).

The specimen with modelled defect 4 constitutes a reference element used for calibration of the system and verification of algorithms under laboratory conditions prior to installation on the actual object. It contains a defect with known geometric parameters.

Under real conditions, the longitudinal measurement gate 5 constitutes a set of measurement electrodes mounted using anisotropic (directionally conductive) adhesive or using magnetic connectors on the pipeline surface along the axis of the weld or pipe. It records the voltage drop $\Delta U_1$ and the pulse propagation time $T_{p1}$ in the longitudinal direction. This enables detection of the defect length and thereby obtaining its longitudinal characteristic (depth in the longitudinal cross-section).

The perpendicular measurement gate 6 (mounted similarly to the longitudinal gate 5) constitutes a set of electrodes positioned at 90 degrees relative to the longitudinal measurement gate 5. It records the voltage drop $\Delta U_2$ and time $T_{p2}$. This enables determination of the defect width and verification of its volume change in the transverse direction. This element is indispensable for "closing" the measurement in the third dimension - it allows determination of the width (flat defects) and diameter (including oval) of the defect, which in combination with data from the longitudinal measurement gate 5 and

the wall thickness enables calculation of the volume.

The longitudinal measurement gate 5 and perpendicular measurement gate 6 preferably have dimensions of 5 mm × 5 mm in thickness and length L covering the area necessary to ensure measurement of the maximum defect length with dimensions preferably from 10 to 100 mm, wherein the indicated area is, with a certain allowance, the space in which the defect is present. The connection to the pipeline wall is preferably carried out using anisotropic (directionally conductive) adhesive or using magnetic connectors. Such a solution ensures a stable electrical contact and minimises transition resistance, which is critical for measuring microvolt voltage changes.

The measurement gates 5, 6 are fastened to the examined element/structure using anisotropic, i.e., directionally conductive, adhesive or using magnetic connectors.

The module switch 7, i.e., the switch to the voltage module (V) or the time base $T_p$, enables selection/change of the return signal analysis mode from the gates between voltage measurement (V) and time base measurement ($T_p$, 1/s). A choice is therefore possible between measurement of the amplitude of the voltage drop or the rise/duration time of the measurement pulse.

The analogue-to-digital converter 8 (A/D) is a circuit converting analogue signals into digital form, enabling their further transmission without quality loss, e.g., enabling remote transmission of data to the monitoring centre. It operates in the range covering both voltage quantities (proportional to volume V) and time quantities ($T_p$).

The digital millivoltmeter 9 (e.g., DC2000), and preferably a 3-range digital millivoltmeter, enables local reading and verification of voltage drops, serving a control function for the correct operation of the gates and enabling precise reading of reference and measurement voltages. The millivoltmeter 9 is intended for measurement of voltage drop depending on the volume of the surface area covered by the measurement gates 5, 6, encompassing the material defect, as well as on the contribution of the defect size and wall thickness, wherein the obtained value constitutes a significant reference result. The millivoltmeter 9 preferably comprises the following measurement ranges: (I) 10 ÷ 300 μV, (II) 1 ÷ 300 mV; (III) 10 ÷ 300 V.

The rectangular digital oscilloscope 10 (e.g., SDS1104X-E) serves for visualization of the pulse waveform in the time domain, i.e., serves for measurement of the duration of the measurement signal. It enables analysis of the signal shape and detection of possible interference, assessment of the nature of these interferences and the dynamics of signal changes at the defect location, with a measurement frequency level and measurement accuracy of 0.5%.

The data transmission unit 11, e.g., an industrial wireless router (e.g., of VAN type), is a communication (transmission) module ensuring transmission of data from the A/D converter to the cloud computing or Monitoring Centre (MC) (to the data storage unit 12). The use of wireless connectivity eliminates the need for permanent signal cabling over long distances and the need for physical access to measurement points (and therefore the presence of an operator in the hazardous zone).

The data storage unit 12, e.g., a cloud storing data - is a remote server infrastructure (server or network infrastructure) accumulating historical and current data, enabling access to measurement data and results from any location.

The data processing unit 13, e.g., a computer (workstation) - is a central unit with analytical software (animation of the measurement program), carrying out visualization of results, calculations and durability reserve forecasts, as well as handling and generating alarms. It is obvious that the data processing unit 13 contains an appropriate operating program carrying out the real-time monitoring process through the application of appropriate measurement automation.

The program enables the realization of measurements using feedback, wherein the processing of measurement data is carried out taking into account reference quantities from previous non-destructive, radiographic and ultrasonic tests. The program is configured to implement the method according to the invention. More specifically, it is configured to analyse changes in voltage drops and pulse propagation times recorded by orthogonally arranged measurement gates 5, 6, and then to determine the three-dimensional propagation of the material defect as a function of the number of operational cycles of the examined structural element. Furthermore, the program additionally enables visualization of defect development in real time or quasi-real time, with presentation of defect volume changes in the form of graphs, maps or spatial models. The program is also additionally adapted for wireless measurement handling of multiple (n) measurement points simultaneously, enabling remote acquisition, synchronization and archiving of measurement data, which allows for continuous monitoring of the technical condition of steel structural elements under operational conditions.

As already mentioned, the method according to the invention is based on the realization of measurement using four gates, i.e., am arrangement of two pairs of electrodes. The measurement is carried out in the measuring system with a continuous system, with the possibility of remote regulation of the sampling frequency as the approach to critical states occurs. The voltage pulse, applied by the voltage pulse source 1, e.g., an inverter-rectifier, plays an analogous role to a seismic pulse in geological research, but in a current-conducting medium. It is initiated in mutually perpendicular directions.

In general, the measurement algorithm proceeds as follows:

1. Initiation - pulse generation by the voltage pulse source 1 directing it successively to each of the

measurement gates 5, 6. For example, the pulse may first be directed to the longitudinal measurement gate 5.

2. Longitudinal measurement - the pulse is directed to the longitudinal measurement gate 5. There is recorded the voltage drop $\Delta U_1$ between the start and end points of the longitudinal measurement gate 5 and, simultaneously, the time $T_{p1}$ (time increment measurement). These values correlate with the length of the defect and its projection onto the longitudinal axis of the pipeline.

3. Perpendicular measurement - the pulse is directed to the perpendicular measurement gate 6. There is recorded the voltage drop $\Delta U_2$ between the start and end points of the perpendicular measurement gate 6 and, simultaneously, the time $T_{p2}$ (time increment measurement). These values correlate with the width of the defect (e.g., in the case of a flat defect) or its thickness/ovality in relation to the diameter of the "wire" (volumetric defect of e.g., void type).

In order to perform the perpendicular measurement, the direction of flow of the voltage pulse is switched from the longitudinal measurement gate 5 to the perpendicular measurement gate 6, with the condition of the transverse axis being perpendicular to the longitudinal axis. This is realized e.g., using switch 3.

In another embodiment, the voltage pulse may be applied simultaneously to both pairs of gates 5, 6, and measured in parallel. For this purpose, it is not necessary to switch the pulse direction - for example, two voltage pulse sources 1 can be used.

The above steps 1-3 constitute the essence of the solution. Cyclic measurement results are obtained from each measuring system - pair of gates 5, 6, placed on the examined object. Depending on the needs, subsequent steps may be carried out, such as those mentioned below.

4. Acquisition and conversion - analogue signals $\Delta U$, $T_p$ are converted to digital form by the analogue-to-digital converter 8 and are preferably entered into the program monitoring structural durability (in MC - Monitoring Centre).

5. Data transmission - digital signals are transmitted, preferably using the data transmission unit 11, to the data storage unit 12 and/or monitoring centre, where the correlation and integration of results takes place. Measurement data are transmitted with the requirement of the specified capacitance values of capacitor 2 and supply voltage depending on wall thickness and cable length of the measuring system. Each application of this specific solution generates a characteristic quantity in the form of a voltage drop, which is also taken into account in the (negative) feedback for the measurement being performed.

6. 3D calculations - the voltage drop in both directions is a function of the volume of material through which it is applied. The loss of material (defect) causes a measurable change in the voltage difference and the temporal profile of the pulse. The system calculates the defect volume using: the mutual perpendicularity of measurement vectors; the relationship of voltage drop $\Delta U$ to the local wall thickness $g_a$, the characteristic defect dimension (previously obtained from baseline RT/UT tests) as a calibration point.

7. Durability determination - the algorithm of the operating program calculates the current durability reserve based on the difference (ULS - SLS). It uses the determined boundary durability curves $N_f$, $N_{fcexp}$ taking into account the actual operating stresses and strains in the fatigue cycle.

The result (durability reserve expressed measurably in terms of the permissible number of cycles for operation and defect length and diameter or wall thickness, and auxiliarily in %) is preferably visualized on the data processing unit 13. Preferably, if the parameters approach the boundary curves, the system automatically increases the measurement frequency and generates an alarm.

In summary, the calculation of defect volume is obtained through decomposition of the measurement from the gates into components: defect length (from longitudinal gate 5), defect width/thickness (from perpendicular gate 6). The measurement of defect volume is therefore obtained by applying a voltage pulse in mutually perpendicular directions and measuring its drop at the defect location on each pair of gates.

This method, using differential analysis of results from mutually perpendicular gates, allows for unambiguous determination of whether the defect is flat or volumetric, and indicates detailed differentiation of defect types, eliminating the ambiguities of the 2D method. The perpendicular measurement also reveals any ovality of the defect in relation to the reference diameter ("wire" from RT tests). The invention therefore allows for the measurement of voltage drop dependent on the defect length (surface defect, flat defect, "nail", reduction in knee thickness), or its internal characteristic (volumetric type: voids, channels, chains of voids, longitudinal voids, slag inclusions, pores, micro-cracks (e.g., type 1001 - visible under a microscope (50×) according to standards PN-EN). Furthermore, the device according to the invention provides the possibility of placement in the clearance between pipes at a level lower than a miniature scanner adapted to a minimum clearance of 12 mm and pipe diameters without the current minimum condition of 21 mm.

As mentioned above, the differential analysis of

the linear relationship of results between $\Delta U$ and $T_p$ and the wall thickness $g_r$ therefore allows for "reconstruction" of the defect to the 3D level. The characteristic dimension a ($\bar{a}$), initially obtained from RT/UT, serves as a reference (calibration) point for the measuring system, but it is the 3D electrical measurement that determines the assessment of the current measured quantity. In the operating program, a feedback loop is implemented for individual measurement data, enabling ongoing correction and updating of defect reconstruction results.

The measurement of voltage drop $\Delta U_1$ between the start and end points of the longitudinal measurement gate 5 and the measurement of voltage drop $\Delta U_2$ for the perpendicular measurement gate 6 (digital millivoltmeter 9), with the simultaneous parallel measurement (rectangular digital oscilloscope 10) of changes in increment (time base $T_p$), i.e., $T_{p2}$ and $T_{p1}$, gives respectively a cyclic result of the measurement method from each pair of gates 5, 6. Each such "measurement signal" is preferably transmitted remotely through the analogue-to-digital converter 8 (digitalization) respectively from each pair of gates 5, 6 to the monitoring centre (MC) and/or cloud.

The basis for determining the actual defect volume is therefore the correlation of measurements of the difference of electrical voltage drops from the gates with the baseline results of non-destructive tests. The demonstrated methods (RT and UT) provide data in one plane: the RT method determines the characteristic dimension (length) and the reference point in the form of the diameter of the image quality indicator wire, while the UT method specifies the depth of the defect position and its length. The method according to the invention also uses perpendicular measurement (perpendicular measurement gate 6), which supplements these data with the third dimension. Analysis of signals from the perpendicular gate, specifically the difference in the linear relationship of voltage drop $\Delta U_2$ and time $T_{p2}$ in relation to the known wire thickness (RT), allows for unambiguous determination of the defect width (in the case of flat defects) or its actual thickness (diameter) and ovality (cases of volumetric defects).

Each measurement (voltage pulse; measurement) therefore comprises measurement of voltage drop $\Delta U_1$ along the longitudinal gate 5 and $\Delta U_2$ perpendicularly (perpendicular measurement gate 6), measurement of time increment $T_{p1}$ and $T_{p2}$ for each measurement pulse, thereby enabling determination of the defect volume and its parameter a with known $g_r$ and comparison with the characteristic defect dimension obtained by RT and UT methods.

In order to precisely link the pair of voltage (electrical) pulses with the physical size of the damage, the procedure requires preliminary verification under laboratory conditions. This allows for the establishment of the relationship between the incremental change in defect dimension (its propagation) and the recorded parameters $\Delta U$ and $T_p$, with the starting characteristic dimension known from 2D tests (RT/UT). Thanks to this combination, it is possible to mathematically determine the key parameters of fracture mechanics: the defect parameter (a) and its characteristic dimension as a function of the actual wall thickness. The performance of measurements under laboratory conditions will make it possible to link the relationship of the incremental change in defect dimension with the reference condition to the characteristic defect dimension in the 2D range by the RT and UT method obtained at the beginning of the measurements. Whereas the combination of the defect volume with the characteristic defect dimension according to RT and verified by the UT method will demonstrate the connection of the defect parameter $\bar{a}$, and $g_r$ relative to the characteristic defect dimension (a). The reference to defect volume is divided by measurement from the gates into demonstrating the actual defect length and diameter or its width (flat) in one plane by the RT and UT method (RT method; characteristic dimension and diameter of the wire, and UT; depth of defect position and characteristic dimension - length). On the other hand, the perpendicular measurement allows for unambiguous determination of the width dimension (flat defect) or height (thickness) of the defect with demonstration of the case of its ovality referenced to the diameter of the wire thickness (RT) through analysis using in this respect the difference from the linear relationship of results between $\Delta U_2$ and $Tp_2$ and the wire "thickness".

In summary, the essence of the measurement method is the realization of a combined measurement in mutually perpendicular planes. It uses a voltage pulse initiating the measurement, whose propagation in the current-conducting medium is analogous to the propagation of a seismic pulse in geological research, but takes place in two orthogonal directions. This unique approach enables the transition from flat estimation (2D) to the determination of a realistic, three-dimensional defect dimension from defect volume in real time.

The digitalized analogue measurement quantities from the measurement gates 5, 6 are transmitted in real time to the MC (Monitoring Centre), or retrieved from the "cloud" by the MC, which serves the role of the analytical-decision unit. An element of the software is preferably an algorithm managing measurement frequency: under stable and safe installation operating conditions (the system automatically reduces the number of measurements, which optimises energy and transmission resource consumption). However, upon detection of an upward defect trend or the approach of parameters to the ULS boundary curves, the system increases the recording frequency and activates alarm procedures. Visualization of changes in the operational state allows the operator in the MC to continuously track the dynamic process of changes in pipeline tank durability through defect propagation from the initiation level in the pipeline or tank wall and to respond to the level of reaching the measurement deviation of the defect size to the defect size of the permissible boundary state.

Parallel measurement in the longitudinal and perpendicular gate enables precise determination of the actual length, width and height (defect thickness), which constitutes the three-dimensional nature of the analysis (3D). Integration of these data with the baseline results of RT and UT methods (according to PN-EN - ISO PE and TOFD; as a reminder) allows for a constant connection of the spatial dimension of the defect length (position angle) as the characteristic defect length with the actual, current wall thickness of the pipeline. This approach enables precise determination of the durability reserve as the difference ULS - SLS, which is impossible with the use of traditional methods.

The developed measurement method requires only a one-time shutdown and uncover of the installation to provide the measurement gates 5, 6. It allows for minimization of the number of necessary installation shutdowns, reduction of the number of manual inspections, reduction of the required excavation, removal of insulation and uncovering of pipelines and hence consumption of repair materials.

The measurement gates 5, 6 can be placed on the surface of the examined object in an easy manner, for example by gluing on the surface of the examined structure using anisotropic adhesive, or by attaching them using a magnetic connector.

The measurement gates 5, 6, with exemplary dimensions of 5 mm × 5 mm in thickness, are preferably made of copper and connected e.g., with anisotropic adhesive to the wall and insulated conductor of the examined object, or connected using a magnetic connector to this conductor of length corresponding to the defect area, i.e., e.g., in the range from 10 to 100 mm.

The development of the method and measuring device according to the invention fits within the strategy of "transformation of the economy towards Industry 4.0" (shifting the operation of structures to the elastic-plastic state), and through the design of a product linking measurement automation (operating program), i.e., the communication of the measuring device with human (through visualization), taking into account an appropriate level of safety through monitoring of the operational suitability state. It enables optimization of durability, also fitting within the "green economy trend". This trend contains eco-innovation on the European and Polish market scale in the field of transformation towards a green economy, through reduction of the number of necessary installation warm-ups, reduction in the frequency of arrivals of all types of inspections, services and groups performing measurements, minimization of the necessity to excavate measurement locations, and reduction of the use of repair materials (insulation, structural).

The developed measurement method allows for the application of the measuring device together with the operating program to indicate the precise durability reserve taking into account changes in mechanical and structural properties of steel of operated pipelines under normal and specific conditions (explosion-proof). The method enables consideration of the behaviour of the weld in the range of occurrence of hydrogen concentrations (lower and upper explosive limit LEL/UEL): up to 4% and above 76% of this limit, or from 5% to 15% for methane, within the applicability to medium or ambient temperature of 120°C, with 3D context, with an option for extension to 200°C - 250°C. Preferably, the device is provided with an explosion-proof housing, and enables measurements on pipelines with tees of various diameter ranges and purposes, and with elbows at 90°, and also at high pressure of the transmitted medium. The invention allows for visualization of the operational durability of a pipeline or tanks for a single element or an installation with multiple (n) elements. All received data and calculated results can be stored in one place (MC).

Visualization of the decreasing durability reserve allows for the selection of installation sections that can still operate in supervised mode (even with so-called "wet" or "leaking" state for a pipeline with limited durability), taking into account the fact that it requires immediate repair.

For a better illustration of the operation of the invention, a descriptive interpretation of the significance of the individual successive measurements made in the developed method is presented below.

These values, analysed in relation to the yield strength ($R_e$) and tensile strength ($R_m$), constitute the basis for determining the number of cycles to failure ($N_f$) as a function of load and the critical stress intensity factor ($K_{IC}$). The procedure covers the characterization of the Parent Material (PM) and the Welded Joint Material ($PM_w$) and the Heat-Affected Zone (HAZ). This enables identification of the size, type and nature of internal defects and assessment of changes in structural and mechanical properties, correlated with the reference (existing) state of the structure with a 10-12 year operating period.

The purpose of the basic research (as shown in Fig. 1, Stage I) is to obtain specific values of mechanical quantities (actual parameters), necessary for determining the load magnitudes in fatigue tests. These values, analysed in relation to the yield strength $R_e$ and tensile strength $R_m$, constitute the basis for determining the number of cycles to failure $N_f$ as a function of load, and for determining the stress intensity factor $K_{IC}$. The procedure covers the characterization for NM, PM, $PM_w$. The analysis therefore uses the knowledge of the size, type and nature of internal defects in $PM_w$ obtained by the RT and UT method, and knowledge of changes in structural and mechanical properties, also in the HAZ, obtained by methods that correlate with the existing state of the structure, i.e., performed in an earlier period (e.g., 10-12 years earlier).

Developing the issue of the size of the internal defect, using conventional methods (according to PN-EN 5817:2009 and PN-EN 462-1:1998), knowledge is obtained about the type of defect with a certain accuracy of its determination (within the range of ±0.02 mm ÷ 0.05

mm) as to the magnitude of its dimensions in a 2D system, with the condition of projection onto the OX plane. This knowledge is verified by measurement made by the UT method according to category C (examination with increased accuracy) with the provision of characteristics of UT-PE indications (according to ISO 23279 and UT-TEFT according to ISO 15617), using reference standards and a given acceptance level (according to ISO 23279). These dimensions are then referred to the quantities that will be obtained through the measurement of modelled defects (with known parameters), made by laser, e.g., in the shape of a cylinder, dimensionally varied in dimensions and position angles in NM. This action is aimed at obtaining, on one hand, the correlation of defect dimension results with the magnitude of the measurement of the difference in voltage drop, and on the other hand, obtaining knowledge of the accuracy level of measurement by performing error analysis according to JCGM100:2008.

Analysis of a defect with an unambiguously determined dimension of length and circle (cross-section) is also referenced to the case of occurrence of an oval or flat defect (e.g., fusion), through analysis of the occurrence of the difference in the magnitude of voltage drops in relation to the signal generated by a defect with a circular cross-section of the same size. This procedure serves to obtain the most accurate possible representation of the actual spatial shape of the defect (3D) and to obtain knowledge regarding its position in the OY space associated with the actual wall thickness ($g_r$) of the examined element. Such an approach allows for unambiguous determination of the safe operating state in the range of residual durability for SLS and ULS, which is reflected in fatigue calculations for locations exhibiting corrosive or welding defects determining the operational durability of the pipeline or tank.

An aspect of the developed method is the realization of basic fatigue tests conducted in accordance with the rule of ensuring the mean value and repeatability of dimensions, which at the measuring device class of 0.5% enables continuous monitoring and accurate approach of the defect parameter to the boundary curves. More specifically, the approach of the parameter quantity ($\bar{a}$) to the boundary curves is monitored, for the quantity $\bar{a}_C$ of semi-elliptical or elliptical type (critical crack size corresponding to critical load), taking into account the threshold magnitude of crack propagation development. These curves therefore describe the critical crack size of semi-elliptical or elliptical nature corresponding to the critical load, taking into account the threshold value of crack propagation development.

The obtaining of boundary curves (quantity $\bar{a}_C$) is a consequence of fatigue specimen tests of NM, PM, $PM_w$ in the range of load mapping with an increment of 30 [MPa] ≥ from the $R_e$ value to $R_m$. NM specimens will allow obtaining a reference to changes in results for PM, and $PM_w$ to the results from PM tests.

This issue is of particular significance for pipeline structures and tanks, whose design service life to reaching the limit state is usually from 15 to 20 years.

The results obtained from the conducted tests allow for the assessment of the magnitude of the difference between the number of mathematically determined destructive cycles $N_f$ based on the semi-probabilistic method and the experimental $N_{fcexp}$. This enables the determination of boundary curves in the low-cycle range according to the relationships of Manson and Coffin, Morrow, Langer and Ramberg-Osgood taking into account the symmetry and asymmetry of load cycles (also based on error analysis according to JCGM100:2008), and the results obtained from experimental tests.

## Claims

1. A method for measuring the propagation of material defects of steel structures, in particular pipelines and pressure tanks, on which there are provided at least two pairs of measurement gates (5, 6) placed in mutually perpendicular directions, wherein one pair of gates comprises two longitudinal measurement gates (5), and the second pair comprises two perpendicular measurement gates (6), wherein the method comprises the following steps:

    a) applying a voltage pulse to the first pair of gates from the at least two pairs of measurement gates (5, 6);
    b) measuring the voltage drop $\Delta U_1$ and the pulse propagation time $T_{p1}$ on said first pair of measurement gates (5, 6);
    c) applying a voltage pulse to the second pair of gates from the at least two pairs of measurement gates (5, 6);
    d) measuring the voltage drop $\Delta U_2$ and the pulse propagation time $T_{p2}$ on said second pair of measurement gates (5, 6);
    e) determining the change in the three-dimensional defect volume by comparing the results of the voltage difference drops $\Delta U_1$, $\Delta U_2$ and pulse propagation times $T_{p1}$, $T_{p2}$ from the mutually perpendicular measurement gates (5, 6) with reference to a reference result.

2. The method according to claim 1, **characterized in that** the reference result used in step e) is obtained at the calibration stage using radiographic testing (RT) and ultrasonic testing (UT).

3. The method according to claim 1 or 2, **characterized in that** the reference results used in step e) are the characteristic defect dimension $\bar{a}$ and the wall thickness $g_a$, obtained using radiographic testing (RT) determining the characteristic dimension and ultrasonic testing (UT) determining the depths of the beginning and end of the defect.

4. The method according to claim 2 or 3, **characterized in that** in step e) a differential analysis is carried out using the linear relationship of results between the voltage drop $\Delta U$ and the time $T_p$ from the perpendicular gates (6) and the reference dimension of the standard from RT and UT tests.

5. The method according to any of the preceding claims, **characterized in that** it additionally comprises step f) of determining the actual pipeline durability reserve, calculated as the difference between the Ultimate Limit State, ULS, and the Serviceability Limit State, SLS, as the permissible number of cycles of use and defect length, where ULS is determined as the number of cycles to failure based on the defect volume and critical defect dimension determined in step e), and SLS is determined as the predicted number of operational cycles based on current load monitoring and damage accumulation.

6. The method according to claim 5, **characterized in that** the permissible number of cycles to failure is determined using a computational method based on the equivalent stress amplitude and using an experimental method based on tests of material specimens.

7. The method according to any of the preceding claims, **characterized in that** the frequency of generation of measurement pulses in steps a) and c) is regulated adaptively, and is increased upon detection of an upward trend in the defect volume.

8. The method according to any of the preceding claims, **characterized in that** before step e), measurement data from the measurement gates (5, 6) are transmitted to the data storage unit (12) and visualized in real time.

9. A system for measuring the propagation of material defects of steel structures using the method according to any of claims 1 to 8, **characterized in that** it comprises:

- at least one voltage pulse source (1) for applying a pulse to the measurement gates (5, 6);
- at least two pairs of electrodes forming measurement gates (5, 6), wherein they comprise a pair of longitudinal measurement gates (5) and a pair of perpendicular measurement gates (6) positioned orthogonally relative to the pair of longitudinal measurement gates (5), and arranged to be placed on the surface of the examined structure;
- an analogue-to-digital converter (8) for conversion of signals from the measurement gates (5, 6);
- a data storage unit (12), configured to receive and store reference data from radiographic testing (RT) and ultrasonic testing (UT) and measurement data from both measurement gates (5, 6);
- a data processing unit (13), configured to process reference data from radiographic testing (RT) and ultrasonic testing (UT) and to calculate the defect volume based on the correlation of these data with signals from both measurement gates (5, 6).

10. The measuring system according to claim 9, **characterized in that** it additionally comprises a millivoltmeter (9) for local reading of voltage drops and a digital oscilloscope (10) for visualization of the pulse waveform in the time domain.

11. The measuring system according to claim 9 or 10, **characterized in that** it additionally comprises a switch (3) for changing the direction of application of voltage pulses, to the longitudinal gate (5) or perpendicular gate (6) respectively.

12. The measuring system according to any of claims 9 to **11, characterized in that** the measurement gates (5, 6) have dimensions of 5 mm × 5 mm in thickness and a length from 10 mm to 100 mm, wherein preferably the measurement gates (5, 6) are mounted on the surface of the examined structure using anisotropic adhesive or using magnetic connectors.

13. The measuring system according to any of claims 9 to 12, **characterized in that** it comprises a module switch (7) enabling the change of the return signal analysis mode between measurement of the magnitude of the voltage drop and measurement of the increment in the duration of the measurement signal.

14. A computer program comprising instructions which, when the program is executed by a computer, cause the computer to carry out the steps of the method according to claims 1 to 8.

15. A computer-readable data carrier comprising instructions which, when executed by a computer, cause the computer to carry out the steps of the method according to claims 1 to 8.

STAGE I

FULL INSPECTION according to PN-EN 1993-1-1 EUROCODE 3
WELD
DEFECTS; C; D; D⁻
NON-DESTRUCTIVE TESTING
RADIOGRAPHIC TESTING; RT
PN462-1:1998-02 cl.4.1; $l_{pr}^{(2)}$ = 10;25;50;50[mm]
1.00 - 0.25 = $g_{pr}^{(3)}$ = W6; ±0.02 - 0.01
0.40 - 0.10 = $g_{pr}$ = W10; ±0.01 - 0.005
0.20 - 0.05 = $g_{pr}$ = W13; ±0.01 - 0.005
OPERATIONAL DURABILITY DEFECTS
CORROSIVE WEAR
HYDROGEN CORROSION
MATERIAL FATIGUE
ABRASIVE WEAR - THINNING
CORROSION IN THE WELD ZONE
ULTRASONIC TESTING; UT
PN14127:2006-06 cl. 5.4. Reference block
cl. 6.2.1 first reference
cl. 9.5.4 consideration of corrosion types (Annex A; conditions)
cl. C2; Measurement method (Annex no. A)
NM acc. to Test Report
PM
WELD; HAZ-w-HAZ
$g_{rz}^{(4)} < g_{nom}$
OPERATING HISTORY
DESTRUCTIVE TESTING
MECHANICAL AND CHEMICAL PROPERTIES
RESULTS
PM; g
ANALYSIS OF RESULTS
VERIFICATION AGAINST ACCEPTANCE LEVEL according to EN ISO 100675-2 and EN ISO 23279
ERROR CALCULATION OF INDICATIONS according to JCGM100:2008
Evolution of measurement data.
Guide to the expression of uncertainty in measurement
FATIGUE TESTING

Fig. 1

STAGE II
FATIGUE TESTING
external load
residual stresses
stresses related to shape geometry
$a_{cr}$
$KIc, \dots KI$
$\varepsilon_{pl} = \frac{R_{02}}{E}$
$K_{Ic} = \sqrt{\delta_C \cdot E \cdot R_{02}}$
$\delta_C = a_{cr} \cdot \pi \cdot \varepsilon_{pl} (\frac{\sigma_C}{\sigma_{R_{02}}})^2$
$\varepsilon_{ple} = \frac{\sigma}{E}$ when; $\sigma > R_{02}$
$\delta_C, \dots \delta$
$C = \frac{1}{2^{\pi}(\frac{\sigma}{\sigma_{R_{02}}} - 0,25)}$
$\bar{a} = C \cdot \frac{\delta_C}{\varepsilon_{pl}}$
$C = \frac{1}{2^{\pi}(\frac{\varepsilon}{\varepsilon_{pl}} - 0,25)}$
YES
$a_i < \bar{a}c$
NO
$a_i > \bar{a}c$
e
L
grz
$g_{equiv}$
$g_{rz}$
$g_{equiv\,(perm.)}$
T(cycles)

Fig. 2

DISPATCHER
PC
13
12
10
CH
mV
9
11
A/D
8
7
4
6
5
3
2
1

Fig. 3

Europäisches
Patentamt
European
Patent Office
Office européen
des brevets

# EUROPEAN SEARCH REPORT

Application Number
EP 26 15 1173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Sposito Giuseppe: "Advances in potential drop techniques for non-destructive testing" In: "Advances in potential drop techniques for non-destructive testing", 1 January 2009 (2009-01-01), Imperial College London, XP093397402, Retrieved from the Internet: URL:https://www.imperial.ac.uk/media/imperial-college/research-centres-and-groups/non-destructive-evaluation/Sposito_PhD_thesis.pdf?utm_source=copilot.com> * Chapter 5 * ----- | 1-15 | INV. G01N27/20 G01M5/00 |
| A | ZHAO SHUANFENG ET AL: "Visualization investigation of defects in structural steel materials with electrical resistance tomography", CONSTRUCTION & BUILDING MATERIALS, vol. 356, 2 October 2022 (2022-10-02), page 129274, XP093397474, AMSTERDAM, NL ISSN: 0950-0618, DOI: 10.1016/j.conbuildmat.2022.129274 * figure 2 * ----- | 1-15 | TECHNICAL FIELDS SEARCHED (IPC): G01N G01M |
| A | US 9 435 710 B2 (BRANDENBURGER PATENTVERWERTUNG GBR [DE]) 6 September 2016 (2016-09-06) * column 8, lines 19-59 * ----- | 1-15 | |
| A | CORCORAN JOSEPH ET AL: "Potential drop monitoring of creep damage at a weld", AIP CONFERENCE PROCEEDINGS, vol. 1706, 26 July 2015 (2015-07-26), page 170002, XP093397706, DOI: 10.1063/1.4940625 * Fig. 2 and corresponding text passages * ----- | 1-15 | |

The present search report has been drawn up for all claims

1

| Place of search | Date of completion of the search | Examiner |
|---|---|---|
| Munich | 21 May 2026 | Klein, Marc-Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

# ANNEX TO THE EUROPEAN SEARCH REPORT ON EUROPEAN PATENT APPLICATION NO. EP 26 15 1173

This annex lists the patent family members relating to the patent documents cited in the above-mentioned European search report. The members are as contained in the European Patent Office EDP file on
The European Patent Office is in no way liable for these particulars which are merely given for the purpose of information.

21-05-2026

| Patent document cited in search report | Publication date | Patent family member(s) | Publication date |
|---|---|---|---|
| US 9435710 B2 | 06-09-2016 | DE 102012014997 A1 | 15-05-2014 |
| | | EP 2690340 A2 | 29-01-2014 |
| | | US 2014030454 A1 | 30-01-2014 |

EPO FORM P0459

For more details about this annex : see Official Journal of the European Patent Office, No. 12/82